# EUROPÄISCHE PATENTSCHRIFT

(11) **EP 2 221 651 B1**
(45) Veröffentlichungstag und Bekanntmachung des Hinweises auf die Patenterteilung: **21.10.2020**
(21) Anmeldenummer: 10001134.5
(22) Anmeldetag: 04.02.2010
(51) Int. Cl.: G02B 7/02

(54) **Fassung für optische Bauteile**
Mounting for optical components
Monture pour composants optiques

(30) Priorität: 14.02.2009 DE 102009008982
(43) Veröffentlichungstag der Anmeldung: 25.08.2010
(73) Patentinhaber: Karl Storz SE & Co. KG, 78532 Tuttlingen (DE)
(72) Erfinder: Teichtmann, Elmar, D - 75031 Eppingen (DE)
(74) Vertreter: Hofmeister, Frank

(56) Entgegenhaltungen:
- DE-A1-102005 018 766
- JP-A- 8 179 181
- JP-A- H11 271 586
- JP-A- S61 149 911
- JP-A- S61 267 001
- JP-A- 2004 117 839
- US-A- 5 313 333

## Beschreibung

Die Erfindung betrifft eine Fassung für optische Bauteile mit einem ein optisches Bauteil im Wesentlichen ringförmig umfassenden zweiteiligen Fassungsgehäuse, wobei die zwei Gehäuseteile unterschiedliche Wärmeausdehnungskoeffizienten aufweisen und wobei ein Gehäuseteil als das optische Bauteil umfassender Ring ausgebildet ist, an dessen in Richtung der Gehäuselängsachse gesehenen Gehäuseinnenseite eine Nut ausgebildet ist, die zur Aufnahme des zweiten, als Spann- oder Druckring ausgebildeten Gehäuseteils dient.

Fassungen für optische Bauelemente sind aus der Praxis in den verschiedensten Ausführungsformen bekannt. In der Praxis treten immer wieder Probleme mit der Verbindungstechnik im Bereich der Fassung des optischen Bauteils auf, da die verwendeten Gläser Temperaturausdehnungskoeffizienten aufweisen, die signifikant von denen der das optische Bauteil einfassenden Materialien abweichen. Dadurch entstehen entweder bereits beim Verlöten oder aber später bei der Aufbereitung temperaturschwankungsbedingte Spannungen zwischen den Bauteilen, die zum Reißen der Gläser führen können.

Aus der DE 31 16 579 A1 ist eine Optikfassung mit einem zweiteiligen, sich über einzelne radiale Stege am optischen Bauteil abstützenden Gehäuse bekannt, wobei die beiden Gehäuseteile unterschiedliche Wärmeausdehnungskoeffizienten aufweisen, um einen subtraktiven Ausgleich der Dehnungsänderungen zu erzielen. Nachteilig an dieser bekannten Optikfassung ist, dass einerseits die Dimensionierung der Verbindungsstege in Abhängigkeit der Wärmeausdehnungskoeffizienten sehr aufwendig ist und andererseits das optische Bauteil nur über voneinander beabstandete Stege im Gehäuse eingefasst ist, so dass eine derartige Fassung nicht für die abschließende äußere und gegenüber der Umgebung dichte Fassung eines optischen Bauteils geeignet ist.

Eine gattungsgemäße Fassung für optische Bauteile ist beispielsweise aus der JP 61 267001 A bekannt ist. Bei dieser bekannten Fassung besteht die Fassung aus einem das optische Bauteil ringförmig umgebenden Gehäuseteil sowie einem auf das Gehäuseteil aufschraubbaren Pressring, der ebenso wie das Gehäuseteil unmittelbar am optischen Bauteil anliegt. Der Pressring ist dabei auf einen weiter distal vom optischen Bauteil angeordneten Steg einer im Gehäuseteil ausgebildeten Nut aufgeschraubt. Da beide Bauteile der Fassung, nämlich das Gehäuseteil und der Pressring, unmittelbar am optischen Bauteil anliegen, treten auch die unterschiedlichen Wärmeausdehnungskoeffizienten der beiden Bauteile unmitelbar am optischen Bauteil, was zu temperaturschwankungsbedingten Spannungen zwischen den Bauteilen der Fassung und dem optischen Bauteil führen kann.

Davon ausgehend liegt der Erfindung die **Aufgabe** zugrunde, eine Fassung für optische Bauteile zu schaffen, die bei einfachem Aufbau eine spannungsarme und dichte Einfassung des optischen Bauteils gewährleistet.

Die **Lösung** dieser Aufgabenstellung ist erfindungsgemäß dadurch gekennzeichnet, dass die Nut das optische Bauteil umlaufend umgibt, wobei die Nut nahe dem optischen Bauteil so ausgebildet und dimensioniert ist, dass die Nut nur durch einen ein Festkörpergelenk bildenden dünnwandigen Gehäusesteg vom optischen Bauteil und von der Gehäuseaußenseite getrennt ist, der eine elastisch verformbare Biegestelle bildet.

Durch die erfindungsgemäße Ausbildung der beiden Gehäuseteile als das optische Gehäuse vollumfänglich umfassender Ring einerseits und in diesen Ring einzupressender Spann- oder Druckring andererseits wird durch das Verspannen der beiden einen unterschiedlichen Wärmeausdehnungskoeffizienten aufweisenden Bauteile eine Ausdehnungskompensation erzielt. Darüber hinaus ermöglicht das vollumfängliche Umfassen des optischen Bauteils durch das ringförmige Gehäuseteil eine gegenüber der Umgebung dichte Lagerung des optischen Bauteils im Gehäuse.

Um sicherzustellen, dass bei einer Wärmeausdehnung des das optische Bauteil umgebenden ringförmigen Gehäuseteils von diesem Gehäuseteil nur geringe Druckkräfte auf das optische Bauteil ausgeübt werden können, ist die Nut so in der Gehäuseinnenseite des ringförmigen Gehäuseteils angeordnet und dimensioniert, dass die Nut nur durch einen dünnwandigen Gehäusesteg vom optischen Bauteil und von der Gehäuseaußenseite getrennt ist.

Dieser dünnwandige Steg bildet dabei ein Festkörpergelenk, das heißt, eine beabsichtigte elastisch verformbare Biegestelle im an sich einstückigen ringförmigen Gehäuseteil.

Zur Ausbildung des in die Nut einzupressenden Spannrings wird gemäß einer ersten Ausführungsform der Erfindung vorgeschlagen, dass der Spann-/Druckring als massiver Spannring mit einem geringeren Wärmeausdehnungskoeffizienten als der die Nut aufweisende Ring ausgebildet ist.

Gemäß einer zweiten Ausführungsform der Erfindung wird vorgeschlagen dass der in die Nut einzupressende Spann-/Druckring als gezahnter Druckring mit einem größeren Wärmeausdehnungskoeffizienten als der die Nut aufweisende Ring ausgebildet ist, wobei der gezahnte Druckring vorteilhafterweise so in der Nut angeordnet ist, dass die Zähne vom optischen Bauteil fort weisen.

Schließlich wird mit der Erfindung vorgeschlagen, dass zwischen dem optischen Bauteil und dem das optische Bauteil ringförmig umgebenden Gehäuseteil als Dicht- und Haftmittel eine Lot- oder Klebemittelschicht angeordnet ist.

Weitere Merkmale und Vorteile der Erfindung ergeben sich anhand der zugehörigen Zeichnung, in der zwei Ausführungsbeispiele einer erfindungsgemäßen Fassung für optische Bauteile nur beispielhaft dargestellt sind, ohne die Erfindung auf dieses Ausführungsbeispiel zu beschränken. In der Zeichnung zeigt:
- Fig. 1: eine schematische Schnittdarstellung eines optischen Instruments mit einer erfindungsgemäßen Fassung für optische Bauteile;
- Fig. 2: eine vergrößerte ausschnittweise Darstellung einer ersten Ausführungsform des Details II gemäß Fig. 1;
- Fig. 3: eine vergrößerte ausschnittweise Darstellung einer zweiten Ausführungsform des Details III gemäß Fig. 1 in teilweise geschnittener perspektivischer Darstellung und
- Fig. 4: eine vergrößerte Darstellung des Details IV gemäß Fig. 3.

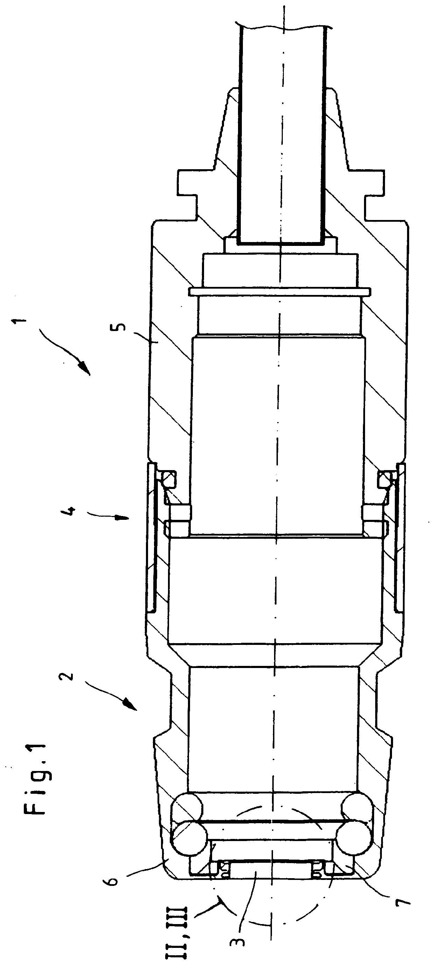

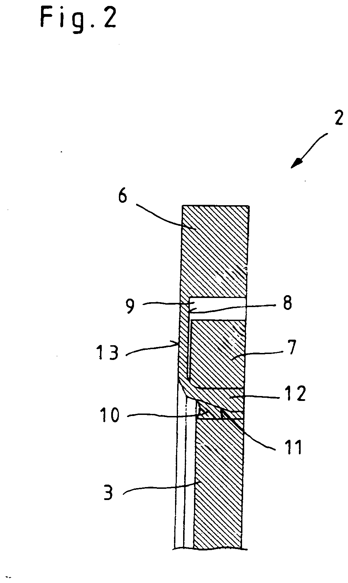

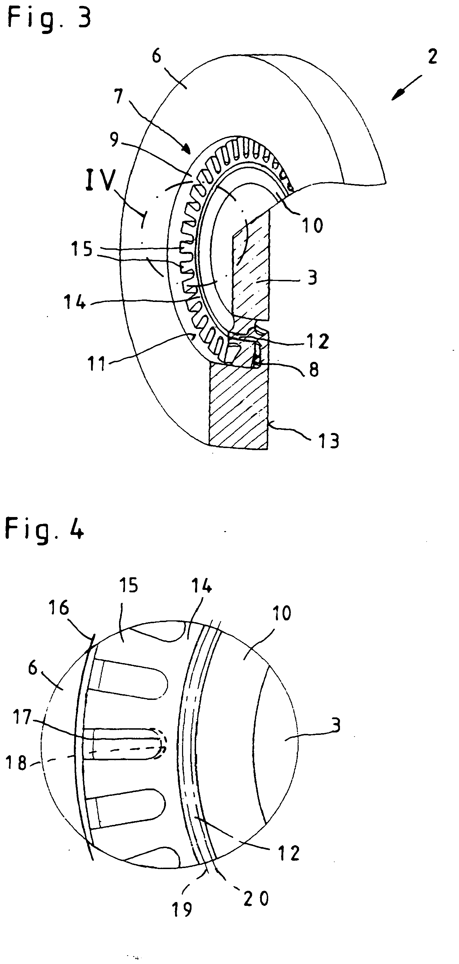

Das in Abbildung Fig. 1 nur schematisch dargestellte optische Instrument 1 weist am distalen Ende eine Fassung 2 für ein optisches Bauteil 3 auf, die über eine Schraubverbindung 4 mit einem Gehäuse 5 des optischen Instruments 1 verbunden ist. Wie weiterhin aus Fig. 1 ersichtlich, besteht die Fassung aus zwei Gehäuseteilen 6 und 7, deren Aufbau den Detailansichten gemäß Fig. 2 und 3 zu entnehmen ist.

Wie aus Fig. 2 und 3 ersichtlich, ist ein Gehäuseteil 6 als das optische Bauteil 3 umfassender Ring 6 ausgebildet, an dessen Gehäuseinnenseite 8 nahe dem optischen Bauteil 3 eine das optische Bauteil 3 umgebende umlaufende Nut 9 ausgebildet ist, die zur Aufnahme des zweiten, als Spann- oder Druckring 7 ausgebildeten zweiten Gehäuseteils 7 dient.

Bei dem in Fig. 1 dargestellten optischen Instrument 1 ist das den Ring 6 bildende Gehäuseteil 6 der Fassung 2 gleichzeitig als kapselartiges Fassungsgehäuse 2 ausgebildet.

Wie weiterhin aus Fig. 2 und 3 ersichtlich, ist zwischen dem optischen Bauteil 3 und dem das optische Bauteil 3 ringförmig umgebenden Gehäuseteil 6 als Dicht- und Haftmittel eine Lot- oder Klebemittelschicht 10 angeordnet, die die Fassung 2 im Bereich des optischen Bauteils 3 gegenüber der Umgebung abdichtet.

Fig. 2 zeigt eine erste Ausführungsform zur Ausbildung einer spannungsarmen Einfassung eines optischen Bauteils 3 in einem Fassungsgehäuse 2. Der das hier als Planglas ausgebildete optische Bauteil 3 vollumfänglich umgebende Ring 6 besteht in der Regel aus einem korrosionsbeständigen Material. Zur Aufnahme des optischen Bauteils 3 weist der Ring 6 eine der Umfangskontur des optischen Bauteils angepasste Aussparung 11 auf, in der das optische Bauteil 3 über die Lot-oder Klebemittelschicht 10 abdichtend festlegbar ist.

Die Nut 9 zur Aufnahme des das zweite Gehäuseteil 7 der Fassung 2 bildenden Spann-/Druckrings 7 ist so in der Gehäuseinnenseite 8 des als Ring 6 ausgebildeten Gehäuseteils 6 angeordnet und dimensioniert, dass die Nut 9 nur durch ein dünnwandigen Gehäusesteg 12 vom optischen Bauteil 3 und von der Gehäuseaußenseite 13 getrennt ist.

Der Ring 6 ist durch die dünnwandige Ausbildung des Gehäusestegs 12 elastisch verformbar, so dass bei einer Wärmeausdehnung des Rings 6 kaum Kräfte bzw. Spannungen von dem radial jenseits der Nut 9 liegenden massiven Gehäuseteil 6 auf den Gehäusesteg 12 und das optische Bauteil 3 übertragbar sind.

Der in die Nut 9 eingepresste Spann-/Druckring 7 ist bei dieser Ausführungsform als massiver Spannring 7 ausgebildet, der aus einem Material mit einem geringeren Wärmeausdehnungskoeffizienten als das Material des die Nut 9 aufweisenden Rings 6 besteht.

Wenn der Ring 6 ohne den eingepressten Spannring 7 erwärmt würde, würde sich der Ring 6 so ausdehnen, dass die Aussparung 11 für das optische Bauteil 3 größer würde und es zu Spannungen und Rissen im Bereich der Lot- oder Klebemittelschicht 10 käme.

Mit dem eingepressten Spannring 7 ändert sich das Wärmeausdehnungsverhalten der Fassung 2, da sich der Spannring 7 aufgrund seines geringen oder sogar negativen Wärmeausdehnungskoeffizienten bei Erwärmung kaum ausdehnt oder sogar zusammenzieht. Der eingepresste Spannring 7 verhindert somit eine ungehinderte Ausdehnung des Rings 6. Durch die dünnwandige Ausbildung des Gehäusestegs 12 kann das Material des Gehäusestegs 12 nicht genügend Druck aufbringen, um den Spannring 7 stark zu dehnen, so dass es, wenn überhaupt, nur zu einer geringen Größenänderung im Bereich der Einfassung des optischen Bauteils 3 kommt.

Durch geeignete Kombination der Dickenverhältnisse zwischen Spannring 7 einerseits und Gehäusesteg 12 andererseits kann die gesamte Ausdehnung der Einfassung des optischen Bauteils 3 eingestellt und der Ausdehnung des optischen Bauteils 3 sowie der Lot- oder Klebemittelschicht 10 angepasst werden.

Fig. 3 und 4 zeigen eine zweite Ausführungsform zur Ausbildung einer spannungsarmen Einfassung eines optischen Bauteils 3 in einem Fassungsgehäuse 2. Der das hier ebenfalls als Planglas ausgebildete optische Bauteil 3 vollumfänglich umgebende Ring 6 besteht in der Regel aus einem korrosionsbeständigen Material. Zur Aufnahme des optischen Bauteils 3 weist der Ring 6 ebenfalls eine der Umfangskontur des optischen Bauteils angepasste Aussparung 11 auf, in der das optische Bauteil 3 über die Lot- oder Klebemittelschicht 10 abdichtend festlegbar ist.

Auch bei dieser zweiten Ausführungsform ist die Nut 9 zur Aufnahme des das zweite Gehäuseteil 7 der Fassung 2 bildenden Spann-/Druckrings 7 so in der Gehäuseinnenseite 8 des als Ring 6 ausgebildeten Gehäuseteils 6 angeordnet und dimensioniert, dass die Nut 9 nur durch einen dünnwandigen Gehäusesteg 12 vom optischen Bauteil 3 und von der Gehäuseaußenseite 13 getrennt ist.

Der in die Nut 9 eingepresste Spann-Druckring 7 ist bei dieser zweiten Ausführungsform als gezahnter Druckring 14 ausgebildet, der aus einem Material mit einem größeren Wärmeausdehnungskoeffizienten als das Material des die Nut 9 aufweisenden Rings 6 besteht. Der gezahnte Druckring 14 ist dabei so in der Nut 9 angeordnet, dass Zähne 15 des gezahnten Druckrings 14 vom optischen Bauteil 3 fort weisen.

Wie aus Fig. 3 und 4 ersichtlich, liegt der gezahnte Druckring 14 mit seinem Außendurchmesser an der radial äußeren Wand der Nut 9 an. Wenn diese Baugruppe erwärmt wird, so dehnt sich der Ring 6 aus, bis die radial äußere Wand der Nut 9 auf dem Kreisabschnitt 16 liegt.

Da der gezahnte Druckring 14 einen größeren Wärmeausdehnungskoeffizienten als der Ring 6 aufweist, dehnt sich dieser stärker aus als der Ring 6. Die sich am Ring 6 abstützenden, als Druckprofile wirkenden Zähne 15 des gezahnten Druckrings 14 können sich nur nach radial innen ausdehnen, da der massive Ring 6 eine weitere Ausdehnung des gezahnten Druckrings 14 nach radial außen verhindert. Bei dieser Ausdehnung nach radial innen bewegt sich die Kontur am Fuße der Zähne 15 von der Position 17 in Richtung auf die Position 18.

Die radial innen an der Lot- oder Klebemittelschicht 10 anliegende Innenwand des dünnwandigen Gehäusestegs 12 würde sich ohne den gezahnten Druckring 14 bis auf den Kreisabschnitt 19 ausdehnen. Da die als Druckprofile wirkenden Zähne 15 des gezahnten Druckrings 14 aber aufgrund ihrer Wärmeausdehnung einen radial nach innen gerichteten Druck auf den dünnwandigen Gehäusesteg 12 ausüben, dehnt sich die Innenwand des dünnwandigen Gehäusestegs 12 nur bis zum Kreisabschnitt 20 aus.

Es entsteht somit eine Verspannung des Rings 6 und des Druckrings 14, bei dem sich die Effekte von Wärmeausdehnung und elastischer Verformung überlagern. Bei entsprechender Dimensionierung und Werkstoffwahl ist es möglich, den dünnwandigen Gehäusesteg 12 zu zwingen, sich bei Temperaturänderung genau so oder ähnlich auszudehnen oder zusammenzuziehen wie das optische Bauteil 3, so dass Spannungen vermieden oder zumindest stark verringert werden.

### Bezugszeichenliste

| | | | |
|---|---|---|---|
| 1 | optisches Instrument | 18 | Position |
| 2 | Fassung/Fassungsgehäuse | 19 | Kreisabschnitt |
| 3 | optisches Bauteil | 20 | Kreisabschnitt |
| 4 | Schraubverbindung | | |
| 5 | Gehäuse | | |
| 6 | Gehäuseteil/Ring | | |
| 7 | Gehäuseteil/Spann-/Druckring | | |
| 8 | Gehäuseinnenseite | | |
| 9 | Nut | | |
| 10 | Lot-oder Klebemittelschicht | | |
| 11 | Aussparung | | |
| 12 | Gehäusesteg | | |
| 13 | Gehäuseaußenseite | | |
| 14 | gezahnter Druckring | | |
| 15 | Zahn | | |
| 16 | Kreisabschnitt | | |
| 17 | Position | | |

## Patentansprüche

1. Fassung für optische Bauteile mit einem ein optisches Bauteil (3) im Wesentlichen ringförmig umfassenden zweiteiligen Fassungsgehäuse (2), wobei die zwei Gehäuseteile (6, 7) unterschiedliche Wärmeausdehnungskoeffizienten aufweisen und wobei ein Gehäuseteil (6) als das optische Bauteil (3) umfassender Ring (6) ausgebildet ist, an dessen in Richtung der Gehäuselängsachse gesehenen Gehäuseinnenseite (8) eine Nut (9) ausgebildet ist, die zur Aufnahme des zweiten, als Spann- oder Druckring (7) ausgebildeten Gehäuseteils (7) dient,
**dadurch gekennzeichnet,**
**dass** die Nut (9) das optische Bauteil (3) umlaufend umgibt, wobei die Nut (9) nahe dem optischen Bauteil (3) so ausgebildet und dimensioniert ist, dass die Nut (9) nur durch einen ein Festkörpergelenk bildenden dünnwandigen Gehäusesteg (12) vom optischen Bauteil (3) und von der Gehäuseaußenseite (13) getrennt ist, der eine elastisch verformbare Biegestelle bildet.

2. Fassung nach Anspruch 1, **dadurch gekennzeichnet, dass** der in die Nut (9) einzupressende Spann-/Druckring (7) als massiver Spannring mit einem geringeren Wärmeausdehnungskoeffizienten als der die Nut (9) aufweisende Ring (6) ausgebildet ist.

3. Fassung nach Anspruch 1, **dadurch gekennzeichnet, dass** der in die Nut (9) einzupressende Spann-/Druckring (7) als gezahnter Druckring (14) mit einem größeren Wärmeausdehnungskoeffizienten als der die Nut (9) aufweisende Ring (6) ausgebildet ist.

4. Fassung nach Anspruch 3, **dadurch gekennzeichnet, dass** der gezahnte Druckring (14) so in der Nut (9) angeordnet ist, dass die Zähne (15) vom optischen Bauteil (3) fort weisen.

5. Fassung nach einem der Ansprüche 1 bis 4, **dadurch gekennzeichnet, dass** zwischen dem optischen Bauteil (3) und dem das optische Bauteil (3) ringförmig umgebenden Gehäuseteil (6) als Dicht- und Haftmittel eine Lot- oder Klebemittelschicht (10) angeordnet ist.

## Claims

1. Mounting for optical components, with a two-part mounting housing (2) enclosing an optical component (3) in a substantially annular manner, the two housing parts (6, 7) having different coefficients of thermal expansion and wherein one housing part (6) is formed as a ring (6) that encloses the optical component (3), on the housing inner side (8) of which, as seen in the direction of the housing longitudinal axis, there is formed a groove (9) which serves for receiving the second housing part (7) formed as a tensioning or pressing ring (7), **characterized in that** the groove (9) surrounds the optical component (3) in a peripheral manner, wherein the groove (9) is formed close to the optical component (3) and dimensioned in such a way that the groove (9) is only separated from the optical component (3) and from the housing outer side (13) by a thin-walled housing web (12) which forms a flexure and which forms an elastically deformable bending point.

2. Mounting according to Claim 1, **characterized in that** the tensioning/pressing ring (7) to be pressed into the groove (9) is formed as a solid tensioning ring with a lower coefficient of thermal expansion than the ring (6) having the groove (9).

3. Mounting according to Claim 1, **characterized in that** the tensioning/pressing ring (7) to be pressed into the groove (9) is formed as a toothed pressing ring (14) with a greater coefficient of thermal expansion than the ring (6) having the groove (9).

4. Mounting according to Claim 3, **characterized in that** the toothed pressing ring (14) is arranged in the groove (9) in such a way that the teeth (15) face away from the optical component (3).

5. Mounting according to one of Claims 1 to 4, **characterized in that** a layer of solder or adhesive (10) is arranged as a sealing and bonding agent between the optical component (3) and the housing part (6) surrounding the optical component (3) in an annular manner.

## Revendications

1. Douille pour composants optiques avec un boîtier de douille (2) en deux parties englobant sensiblement en forme de bague un composant optique (3), où les deux parties de boîtier (6, 7) présentent des coefficients de dilatation thermique différents et où une partie de boîtier (6) est réalisée sous la forme d'une bague (6) englobant le composant optique (3), sur le côté interne de boîtier (8) de laquelle, vu dans la direction de l'axe longitudinal du boîtier, est réalisée une rainure (9) qui sert à recevoir la seconde partie de boîtier (7) réalisée sous forme de bague de serrage ou de pression (7), **caractérisée en ce que** la rainure (9) entoure le composant optique (3) suivant la périphérie, où la rainure (9) est réalisée et dimensionnée à proximité du composant optique (3) de telle manière que la rainure (9) n'est séparée du composant optique (3) et du côté externe de boîtier (13) que par une traverse de boîtier (12) à paroi mince formant une articulation solide, qui forme un point de flexion élastiquement déformable.

2. Douille selon la revendication 1, **caractérisée en ce que** la bague de serrage/pression (7) destinée à être enfoncée dans la rainure (9) est réalisée sous la forme d'une bague de serrage massive avec un plus petit coefficient de dilatation thermique que la bague (6) présentant la rainure (9).

3. Douille selon la revendication 1, **caractérisée en ce que** la bague de serrage/pression (7) destinée à être enfoncée dans la rainure (9) est réalisée sous la forme d'une bague de pression dentée (14) avec un plus grand coefficient de dilatation thermique que la bague (6) présentant la rainure (9).

4. Douille selon la revendication 3, **caractérisée en ce que** la bague de pression dentée (14) est disposée dans la rainure (9) de telle sorte que les dents (15) sont dirigées à l'opposé du composant optique (3).

5. Douille selon l'une des revendications 1 à 4, **caractérisée en ce qu'**une couche de soudure ou d'adhésif (10) est disposée comme agent d'étanchéité et adhésif entre le composant optique (3) et la partie de boîtier (6) entourant en forme de bague le composant optique (3).
